# EUROPEAN PATENT APPLICATION

(11) **EP 2 284 239 A1**
(43) Date of publication of application: **16.02.2011**
(21) Application number: 10251075.7
(22) Date of filing: 11.06.2010
(51) Int. Cl.: C09J 183/04, B29C 65/50

(54) **Bonder article**

(30) Priority: 11.06.2009 JP 2009140034
(71) Applicant: Shin-Etsu Chemical Co., Ltd., Tokyo 100-0004 (JP)
(72) Inventor: Fujiwara, Aktisugu, Gunma-ken (JP); Kimura, Tsuneo, Gunma-ken (JP)
(74) Representative: Stoner, Gerard Patrick

(57) **Abstract**

In a bonded article comprising a pair of substrates joined with a silicone base adhesive, a thin layer comprising a room temperature curable organopolysiloxane composition in the cured state having a lower strength than the adhesive intervenes between the substrate and the adhesive. The article is ready for recycling even after exposure to elevated temperature.

## Description

This invention relates to bonded articles which are used as electric/electronic components in automobiles, electric appliances or the like, and make more efficient the step of selecting components during recovery, repair and recycle of such products.

### BACKGROUND

Silicone base adhesives and sealants are widely used in the automotive, electric/electronic, and building fields because of their advantages of adhesion, heat resistance and weather resistance. Since silicone base adhesives and sealants are usually substantially undegradable, components using them are difficult to repair or recycle.

Today in every field, articles are desired to be recyclable to meet the requirements of environment friendliness and cost saving. In the automotive, electric appliance and electric/electronic fields as well, it is required that members joined with adhesive be disintegrated for recycling purposes.

Several methods are known for easy disintegration of a bonded article joined with a curable resin composition. For example, JP-A 2003-026784 discloses a bonded article of substrates joined with a polyol base curable composition wherein the cured composition is softened or liquefied by heating at 150 to 200° C, whereby the article is disintegrated into substrates. JP-A 2002-327163 discloses a method for disintegrating a bonded structure of components bonded with a moisture-curable urethane prepolymer base adhesive by contacting a halogenated organic solvent with the bonding site to weaken the bond strength of the bonding site and disintegrating the bonded structure at the bonding site into components. JP-A 2008-120903 discloses a releasable adhesive tape using an adhesive layer of a vinyl monomer mixture based on an alkyl (meth)acrylate, which maintains a high bond strength in the normal state, but is reduced in bond strength upon heating, so that the tape may be easily separated and disintegrated.

Unlike general organic adhesives, silicone base adhesives have a problem inherent to their desirable heat and weather resistance, that is, the once cured adhesive is difficult to soften, liquefy or chemically degrade by application of heat, UV or the like. Since silicone base adhesives are used mainly at the place where heat resistance and weather resistance are required, a choice of heat or UV as a trigger for the disintegration process is undesired from the standpoint of adhesion reliability.

A masking silicone base adhesive is proposed as the silicone base adhesive which provides a satisfactory seal, but allows members to be readily disintegrated. Some masking silicone base adhesives are free of a tackifier, but contain a release agent to impart parting properties from glass and metals. For example, JP-A 2005-282165 discloses a silicone base adhesive which develops parting properties upon heating. JP-A 2005-105263 discloses a joint structure of substrates bonded with a silicone base adhesive wherein the substrates are separated by applying ultrasonic vibration to the joint structure.

However, these silicone base adhesives still have drawbacks. Since the release agent itself loses its effect by pyrolysis during temperature service above 200°C, the silicone base adhesive is eventually bonded to the substrates by heat. Substantial constraints are involved in the step of applying ultrasonic vibration to the joint structure.

For example, the masking silicone base adhesive used in a microwave oven for securing a turntable to a casing must have a bonding/securing ability. It develops an enhanced bond to a member by the heat generated during oven operation, making disintegration difficult and hindering recovery and repair.

### Citation List

Patent Document 1: JP-A 2003-026784
Patent Document 2: JP-A 2002-327163
Patent Document 3: JP-A 2008-120903
Patent Document 4: JP-A 2005-282165
Patent Document 5: JP-A 2005-105263
An object herein is to provide new and useful bonded articles comprising substrates adhesively joined together, which exhibit a satisfactory seal but can be ready for recycling without breakage of the substrates after normal service, preferably even after exposure to high temperature.

It is desired to make more efficient the step of selection of components during recovery, repair and recycle of electric/electronic products or the like, the component being a bonded article comprising a pair of useful substrates joined together with a silicone base adhesive. The inventors have found that if a thin layer comprising a room temperature curable organopolysiloxane composition in the cured state having a lower strength than the silicone base adhesive is disposed between the substrate and the silicone base adhesive, the bonded article exerts a satisfactory seal and is ready for recycling without breakage of the substrates after the normal service and even after exposure to high temperature.

Specifically, when the silicone base adhesive for joining two substrates together is formed as a discontinuous layer whose rubber strength changes stepwise, the bonded article maintains a satisfactory seal in service because of the bond formed. When a stress for disintegration purpose is applied to the bonded article after degradation at normal temperature or high temperature, the lower rubber strength layer of the discontinuous layer is broken so that the article is readily disintegrable. The discontinuous layer is constructed by combining a thin layer of a room temperature curable organopolysiloxane composition having a relatively low strength in the cured state with a layer of a silicone base adhesive having a high strength. A bonded article ready for recycling is obtainable without detracting from the bond strength of the bonded article. The invention is predicated on this finding.

The invention provides a bonded article ready for recycling comprising a pair of substrates joined with a silicone base adhesive, wherein a thin layer comprising a room temperature curable organopolysiloxane composition in the cured state having a lower strength than the silicone base adhesive intervenes between one or both said substrates and the silicone base adhesive.

In a preferred embodiment, the thin layer has a thickness of 10 to 500 µm. The room temperature curable organopolysiloxane composition in the cured state preferably has a tensile strength of 0.01 to 0.5 MPa according to JIS K-6249. More preferably, a difference in tensile strength between the silicone base adhesive and the room temperature curable organopolysiloxane composition in the cured state is at least 0.5 MPa, provided that the tensile strength is measured according to JIS K-6249.

The substrates are typically of glass and/or metal.

The bonded article is typically an automotive part or electric/electronic part. Methods of making such articles and of disintegrating them are further aspects of our proposals.

### ADVANTAGEOUS EFFECTS

While the bonded article maintains a satisfactory bond and/or seal, it is easily disintegrable for recycle purposes without breakage of constituent substrates.

### FURTHER EXPLANATIONS; OPTIONS AND PREFERENCES

According to the invention, the bonded article ready for recycling is defined as comprising a pair of substrates joined with a silicone base adhesive. A thin layer (or primer layer) comprising a room temperature curable (RTC) organopolysiloxane composition in the cured state having a lower strength than the silicone base adhesive intervenes between the substrate and the silicone base adhesive.

### Substrate

The substrates used herein may be of metals, glass, plastics or ceramics, with the metals or glass being preferred. Those substrates suited for use in automotive parts and electric/electronic parts are preferable. A pair of substrates to be joined together may be of the same or different materials.

### Silicone base adhesive

The silicone base adhesive used herein is selected from silicone adhesives and modified silicone adhesives and includes sealing materials. Of these, silicone adhesives are preferred. They may be of any cure mechanisms including condensation cure, addition reaction cure, radical reaction cure, and UV cure. Inter alia, the condensation cure and addition reaction cure are preferred, with the condensation cure being most preferred. Any commercially available silicone adhesives may be used.

### RTC organopolysiloxane composition

The RTC organopolysiloxane composition used herein is not particularly limited as long as the cured product thereof has a lower strength than the silicone base adhesive. Preferred is an RTC organopolysiloxane composition comprising
(A) 100 parts by weight of an organopolysiloxane having the general formula (1): 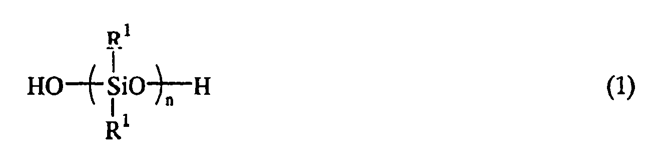 wherein R¹ is a substituted or unsubstituted, monovalent hydrocarbon group of 1 to 10 carbon atoms, and n is an integer of at least 10,
(B) 0.1 to 30 parts by weight of a silane compound having in a molecule at least two silicon-bonded hydrolyzable
   groups and a remainder silicon-bonded organic group(s) selected from methyl, ethyl, propyl, vinyl and phenyl, and/or a partial hydrolyzate thereof, and
(C) 0.01 to 5 parts by weight of a curing catalyst.
The respective components are described in detail.

Component (A) is an organopolysiloxane having the general formula (1): 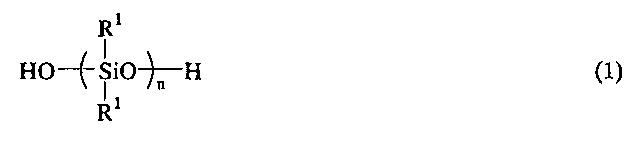 wherein R¹ is a substituted or unsubstituted, monovalent hydrocarbon group of 1 to 10 carbon atoms, and n is an integer of at least 10.

Examples of the monovalent hydrocarbon group represented by R¹ include alkyl groups such as methyl, ethyl and propyl, cycloalkyl groups such as cyclohexyl, alkenyl groups such as vinyl and allyl, aryl groups such as phenyl and tolyl, and substituted forms of the foregoing in which some hydrogen atoms are substituted by halogen or the like, such as 3,3,3-trifluoropropyl. Inter alia, methyl is preferred. A plurality of groups R¹ in formula (1) may be the same or different.

The subscript n is an integer of at least 10, and is preferably such an integer that the diorganopolysiloxane may have a viscosity of 0.1 to 500,000 mm²/s, especially 10 to 10,000 mm²/s at 25° C. Note that the viscosity is measured by a Brookfield rotational viscometer.

Component (B) is a silane compound having in a molecule at least two silicon-bonded hydrolyzable groups and a remainder silicon-bonded organic group(s) selected from methyl, ethyl, propyl, vinyl and phenyl, and/or a partial hydrolyzate thereof.

The silane compound used herein may have the general formula (2):

R²₄₋ₐSiXₐ (2)

wherein R² is a group selected from methyl, ethyl, propyl, vinyl and phenyl, X is a hydrolyzable group, and a is 2 or 3. A mixture of such silane compounds is also useful.

Examples of the hydrolyzable group X that the silane compound or partial hydrolyzate thereof as component (B) possesses include ketoxime, alkoxy, acetoxy, and isopropenoxy, with the alkoxy and isopropenoxy being preferred.

Examples of the silane compound (B) include alkoxysilanes such as methyltrimethoxysilane, dimethyldimethoxysilane, vinyltrimethoxysilane, phenyltrimethoxysilane, and methyltriethoxysilane, isopropenoxysilanes such as methyltriisopropenoxysilane, ethyltriisopropenoxysilane, vinyltriisopropenoxysilane, and phenyltriisopropenoxysilane, and acetoxysilanes such as methyltriacetoxysilane, ethyltriacetoxysilane, and vinyltriacetoxysilane, as well as partial hydrolytic condensates of these silanes.

Component (B) is compounded in an amount of 0.1 to 30 parts, preferably 0.5 to 20 parts, and more preferably 1 to 15 parts by weight per 100 parts by weight of component (A). Less than 0.1 pbw of component (B) fails to incur crosslinking or to provide a useful composition whereas more than 30 pbw may result in a cured composition having poor mechanical properties.

Component (C) is a curing catalyst for catalyzing condensation reaction between components (A) and (B) in the composition. The catalyst may be used alone or in admixture of two or more.

Examples of the catalyst include tin catalysts such as tin dioctoate, dimethyltin diversatate, dibutyldimethoxytin, dibutyltin diacetate, dibutyltin dioctoate, dibutyltin dilaurate, dibutyltin dibenzylmaleate, dioctyltin dilaurate, and tin chelates; strong base compounds such as guanidine and 1,8-diazabicyclo[5.4.0]-7-undecene (DBU), and alkoxysilanes having residues thereof; and titanic acid esters and titanium chelates such as tetraisopropoxytitanium, tetra-n-butoxytitanium, tetrakis(2-ethylhexoxy)titanium, diisopropoxybis(acetylacetonato)titanium, and titanium isopropoxyoctylene glycol.

Component (C) is compounded in an amount of 0.01 to 5 parts, preferably 0.01 to 3 parts, and more preferably 0.02 to 2 parts by weight per 100 parts by weight of component (A). Less than 0.01 pbw of component (C) may provide insufficient cure whereas more than 5 pbw may detract from shelf stability.

In the preferred RTC organopolysiloxane composition, (D) an organopolysiloxane having the general formula (3) is compounded. Inclusion of component (D) facilitates to adjust the viscosity and cured strength of the composition.

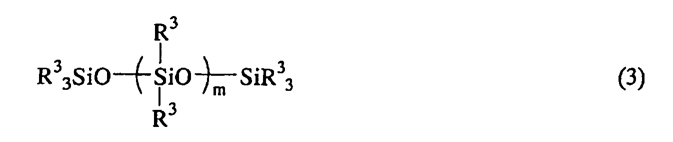

Herein R³ is a substituted or unsubstituted, monovalent hydrocarbon group of 1 to 10 carbon atoms, examples of which are the same as exemplified for R¹ in formula (1), with methyl being most preferred. The subscript m is an integer of at least 2, preferably 2 to 1,000, and more preferably 2 to 500.

Component (D) is preferably compounded in an amount of 1 to 200 parts, more preferably 5 to 100 parts by weight per 100 parts by weight of component (A).

The RTC organopolysiloxane composition may be diluted with (E) an organic solvent for facilitating to form a thin film and to control the thickness thereof. The organic solvent (E) is not particularly limited as long as components of the silicone composition are dissolved or uniformly dispersed therein. Low polar organic solvents are preferred. Examples include C₅-C₈ alkanes such as n-pentane and its isomers, n-hexane and its isomers, n-pentane and its isomers, n-octane and its isomers, C₅-C₈ cycloalkanes such as cyclopentane and its isomers, cyclohexane and its isomers, cycloheptane and its isomers, cyclooctane and its isomers, C₃-C₆ ketone compounds such as acetone, 2-butanone, 2-pentanone, 3-pentanone, 3-methyl-2-butanone, 2-hexanone, 3-hexanone, 3-methyl-2-pentanone, 4-methyl-2-pentanone, 2-methyl-3-pentanone, 3,3-dimethyl-2-butanone, and aromatic ring-containing organic compounds of 6 to 8 carbon atoms such as benzene, toluene, ethylbenzene, xylene and isomers thereof. Inter alia, C₅-C₈ alkanes are preferred, with n-hexane and n-heptane being most preferred.

Component (E) is not necessary when the composition has a relatively low viscosity. When compounded, an amount of component (E) is preferably 0 to 2,000 parts, more preferably 50 to 1,500 parts, and even more preferably 100 to 1,000 parts by weight relative to 100 parts by weight of the composition (i.e., total of components (A) to (D), or total of components (A) to (D) plus optional components). An excess amount of component (E) may rather exacerbate working efficiency.

In the RTC organopolysiloxane composition, any well-known additives commonly used in ordinary RTC organopolysiloxane compositions may be added as long as the objects of the invention are not impaired.

The RTC organopolysiloxane composition may be prepared by any well-known methods, specifically by intimately mixing the foregoing components.

The RTC organopolysiloxane composition in the cured state preferably has a tensile strength of 0.01 to 0.5 MPa, and more preferably 0.05 to 0.3 MPa, according to JIS K-6249. A lower tensile strength may lead to a bonded article having a low bond strength whereas a higher tensile strength may interfere with disintegration and recycling.

Characteristically the cured RTC organopolysiloxane composition has a lower strength e.g. tensile strength than the silicone base adhesive. Preferably a difference in tensile strength between the silicone base adhesive and the cured RTC organopolysiloxane composition is at least 0.5 MPa, more preferably 0.5 to 3.5 MPa, provided that the tensile strength is measured according to JIS K-6249. The difference of tensile strength in the range ensures easy disintegration and recycling.

In the bonded article, the thin layer of the cured RTC organopolysiloxane composition preferably has a thickness of 10 to 500 µm, more preferably 20 to 300 µm. Outside the range, a thinner layer may adversely affect disintegration and recycling whereas a thicker layer may detract from the function of the bonded article. The silicone base adhesive layer is usually thicker, with thickness as usually found in bonded articles: a thickness in the range of 0.1 to 5mm, especially 0.3 to 3 mm is preferred.

The method of manufacturing the bonded article is not particularly limited. For example, a thin layer of the RTC organopolysiloxane composition is formed on a surface of one substrate. The substrates are then joined together with a silicone base adhesive so that the adhesive layer is sandwiched between the substrates and the thin layer is disposed between the substrate and the adhesive layer.

The bonded article exhibits the properties of the silicone base adhesive during normal service. The bonded article can be easily disintegrated for recycling purposes because the cured layer (or primer layer) of the RTC organopolysiloxane composition is easily broken.

### EXAMPLE

Examples of the invention are given below by way of illustration and not by way of limitation.

### Example 1

A composition #1 was prepared by agitating 50 parts by weight of a dimethylpolysiloxane capped at either end with a hydroxyl group having a viscosity of 1,000 mm²/s and 50 parts by weight of a dimethylpolysiloxane capped at either end with a hydroxyl group having a viscosity of 5,000 mm²/s at room temperature for 10 minutes, adding thereto 4 parts by weight of vinyltriisopropenoxysilane and 0.35 part by weight of tetramethylguanidylpropyltrimethoxysilane, agitating at room temperature for 10 minutes until uniform, adding 428 parts by weight of n-hexane, and agitating for a further 10 minutes. Composition #1 had a tensile strength of 0.2 MPa in the cured state.

Composition #1 was thinly brush coated on the surfaces of two glass plates and allowed to stand for 30 minutes to form a coating of 15 µm thick. After 30 minutes, an RTV silicone adhesive having a tensile strength of 2.8 MPa in the cured state (available from Shin-Etsu Chemical Co., Ltd.) was applied on the coated surface of one glass plate. The other coated glass plate was rested thereon so that the adhesive was sandwiched between the glass plates to define a spacing of 3 mm. The assembly was aged at 23°C and 50% RH for 7 days, completing a bonded article #1.

### Example 2

A composition #2 was prepared by agitating 100 parts by weight of a dimethylpolysiloxane capped at either end with a hydroxyl group having a viscosity of 1,000 mm²/s, 20 parts by weight of a dimethylpolysiloxane capped at either end with a trimethylsilyl group having a viscosity of 300 mm²/s, 10 parts by weight of vinyltriisopropenoxysilane and 1 part by weight of tetramethylguanidylpropyltrimethoxysilane at room temperature for 20 minutes until uniform, adding 131 parts by weight of n-hexane, and agitating for a further 10 minutes. Composition #2 had a tensile strength of 0.1 MPa in the cured state.

As in Example 1, composition #2 was thinly brush coated on the surfaces of two glass plates and allowed to stand for 30 minutes to form a coating of 20 µm thick. After 30 minutes, an RTV silicone adhesive having a tensile strength of 2.8 MPa in the cured state (available from Shin-Etsu Chemical Co., Ltd.) was applied on the coated surface of one glass plate. The other coated glass plate was rested thereon so that the adhesive was sandwiched between the glass plates to define a spacing of 3 mm. The assembly was aged at 23°C and 50% RH for 7 days, completing a bonded article #2.

### Example 3

A composition #3 was prepared by agitating 80 parts by weight of a dimethylpolysiloxane capped at either end with a hydroxyl group having a viscosity of 1,000 mm²/s and 20 parts by weight of a dimethylpolysiloxane capped at either end with a hydroxyl group having a viscosity of 30 mm²/s at room temperature for 10 minutes, adding thereto 15 parts by weight of vinyltriisopropenoxysilane and 1 part by weight of tetramethylguanidylpropyltrimethoxysilane, and agitating under a reduced pressure for 30 minutes. Thereafter, 80 parts by weight of a dimethylpolysiloxane capped at either end with a trimethylsilyl group having a viscosity of 0.7 mm²/s was added to the mixture, which was agitated for a further 20 minutes. The resulting composition #3 had a tensile strength of 0.1 MPa in the cured state.

As in Example 1, composition #3 was thinly brush coated on the surfaces of two glass plates and allowed to stand for 30 minutes to form a coating of 30 µm thick. After 30 minutes, an RTV silicone adhesive having a tensile strength of 2.8 MPa in the cured state (available from Shin-Etsu Chemical Co., Ltd.) was applied on the coated surface of one glass plate. The other coated glass plate was rested thereon so that the adhesive was sandwiched between the glass plates to define a spacing of 3 mm. The assembly was aged at 23°C and 50% RH for 7 days, completing a bonded article #3.

### Comparative Example 1

The RTV silicone adhesive having a tensile strength of 2.8 MPa in the cured state (available from Shin-Etsu Chemical Co., Ltd.) was directly applied on the surface of a glass plate without pre-coating it with the composition as in Examples 1, 2 and 3. Another glass plate was rested thereon so that the adhesive was sandwiched between the glass plates to define a spacing of 3 mm. The assembly was aged at 23°C and 50% RH for 7 days, completing a bonded article #4.

The bonded articles #1 to #4 were held at a high temperature of 250°C for 1,000 hours and examined at intervals whether they were separated/disintegrated.

**Table 1**

| | 250° C | | | |
|---|---|---|---|---|
| | 0 hr | 480 hr | 720 hr | 1,000 hr |
| Example 1 | separated | separated | separated | separated |
| Example 2 | separated | separated | separated | separated |
| Example 3 | separated | separated | separated | separated |
| Comparative Example 1 | separated | not separable | not separable | not separable |

### Note

In respect of numerical ranges disclosed in the present description it will of course be understood that in the normal way the technical criterion for the upper limit is different from the technical criterion for the lower limit, i.e. the upper and lower limits are intrinsically distinct proposals.

Tensile strengths referred to herein can be as measured according to JIS K-6249, such as in a cured adhesive test sample rather than in a described bonded article.

## Claims

1. A bonded article ready for recycling comprising a pair of substrates joined with a silicone base adhesive, wherein a thin layer comprising a room temperature curable organopolysiloxane composition in the cured state having a lower strength than the silicone base adhesive intervenes between a said substrate and the silicone base adhesive.

2. The bonded article of claim 1 wherein the thin layer has a thickness of 10 to 500 µm.

3. The bonded article of claim 1 or 2 wherein the room temperature curable organopolysiloxane composition in the cured state has a tensile strength of 0.01 to 0.5 MPa according to JIS K-6249.

4. The bonded article of any one of claims 1 to 3 wherein a difference in tensile strength between the silicone base adhesive and the room temperature curable organopolysiloxane composition in the cured state is at least 0.5 MPa, provided that the tensile strength is measured according to JIS K-6249.

5. The bonded article of any one of claims 1 to 4 wherein the substrates are of glass and/or metal.

6. The bonded article of any one of claims 1 to 5 which is an automotive part or electric/electronic part.

7. A method of making a bonded article according to any one of claims 1 to 6 comprising providing a thin layer of said room temperature curable organopolysiloxane composition and a layer of said silicone base adhesive between said substrates, and curing.
